# EUROPEAN PATENT APPLICATION

(11) **EP 4 597 866 A1**
(43) Date of publication of application: **06.08.2025**
(21) Application number: 23871349.9
(22) Date of filing: 29.06.2023
(51) Int. Cl.: H04B 7/06, H04B 7/022, H04W 16/28, H04W 88/02

(54) **TERMINAL, BASE STATION, AND PROGRAM FOR EXECUTING BEAMFORMING USING MULTIANTENNA**

(30) Priority: 29.09.2022 JP 2022156966
(71) Applicant: KDDI Corporation, Tokyo 163-8003 (JP)
(72) Inventor: KAMIWATARI, Shunsuke, Fujimino-shi, Saitama 356-8502 (JP); OHSEKI, Takeo, Fujimino-shi, Saitama 356-8502 (JP); KANNO, Issei, Fujimino-shi, Saitama 356-8502 (JP); AMANO, Yoshiaki, Fujimino-shi, Saitama 356-8502 (JP)
(74) Representative: Mathys & Squire
(86) International application number: PCT/JP2023/024204
(87) International publication number: WO 2024/070104

(57) **Abstract**

A base station has multiple antennas that support beamforming and are capable of transmitting downlink beams in a plurality of directions. A terminal has multiple antennas that support beamforming and are capable of transmitting uplink beams in a plurality of directions, communication quality measurement means for, for each of the uplink beams of different directions of the terminal, measuring communication qualities of the plurality of downlink beams from each base station, best downlink beam selection means for, for each of the uplink beams of different directions, selecting a best downlink beam with a communication quality equal to or higher than a predetermined condition from among the plurality of downlink beams of each base station, and best uplink beam selection means for selecting, from among the plurality of uplink beams of the terminal, a best uplink beam for which a sum total of communication qualities of the best downlink beams of all of the base stations is equal to or larger than a predetermined condition.

## Description

### TECHNICAL FIELD

The present invention relates to a technique of beamforming using multiple antennas between a terminal and a base station.

### BACKGROUND ART

The more a terminal and a base station use radio waves in a high frequency band therebetween, the harder it becomes for the radio waves to reach a distant place. In view of this, there is a technique of "beamforming" where power is focused by narrowing a wide-angle range of radio waves, thereby causing the radio waves to reach a distant place.

"Beamforming" refers to a technique to perform intensive transmission with use of beams having a narrowed wide-angle range in order to compensate for propagation loss. A plurality of synchronization signals for beamforming are used as an SS/PBCH (Synchronization Signal/Physical Broadcast CHannel) block, and a half frame including this block is generated in every constant cycle. Note that the types of beamforming include fully digital, analog, and hybrid.

"Multiple antennas" sequentially transmit wireless signals to which beamforming has been applied through beam sweeping.

Note that multiple antennas that support beamforming are also called massive MIMO, and are composed of tens to hundreds of antenna elements.

According to a conventional cellular system, antenna equipment and storage areas are managed on a per-base station basis. For this reason, depending on the position of a terminal and a time frame, there are cases where interference occurs in relation to another neighboring base station, and the communication quality decreases.

In view of this, there is also an "AP Clustering technique" with which a terminal performs communication in coordination with a plurality of base stations. This technique uses CFm MIMO (Cell-Free massive Multi Input Multi Output), and realizes an increase in the quality of communication between the terminal and the base stations, and a reduction in power consumed by the base stations (see NPL 1, for example).

According to CFm MIMO, each base station has a plurality of antennas that are dispersedly located, and the influence of interference is suppressed between the terminal and the plurality of base stations by placing these antennas in coordination with one another. Furthermore, the base stations transmit reference signals to the terminal while sweeping downlink beams in a plurality of directions. The terminal receives the reference signals, and notifies the base stations of an identifier of the best downlink beam with which the received signal power is maximized.

### CITATION LIST

### NON-PATENT LITERATURE

NPL 1: "KDDI Research, Inc. Succeeded in Demonstration Experiments on MIMO Technique to Increase Quality and Save Energy in Communication", [online], [retrieved on September 5, 2022, the Internet <URL:https://k-tai. watch. impress. co.jp/docs/news/1384661.html>

### SUMMARY OF INVENTION

### TECHNICAL PROBLEM

In recent years, some terminals are equipped with multiple antennas that support beamforming, and capable of transmitting a plurality of uplink beams.

In the case of a cellular method, in order to connect to one base station, a terminal can select the best uplink beam with which the received signal power is maximized.

However, it is difficult to determine combinations of a plurality of uplink beams of a terminal and a plurality of downlink beams of a base station in, for instance, the following examples.

### (Example 1)

In a case where one terminal simultaneously with a plurality of base stations, combinations of a plurality of uplink beams of the terminal and a plurality of downlink beams of each of the plurality of base stations.

### (Example 2)

In a case where one base station communicates simultaneously with a plurality of terminals, combinations of a plurality of downlink beams of the base station and a plurality of uplink beams of each of the plurality of terminals.

That is to say, as multi connection is expected whereby one or more terminals and one or more base stations communicate simultaneously with one another, even if an uplink beam and a downlink beam have been determined while giving priority to one path, the communication quality (e.g., the received signal power) may be deteriorated with regard to another path.

### SOLUTION TO PROBLEM

The present invention provides a terminal, a base station, and a program capable of selecting the optimal combination of an uplink beam and a downlink beam in beamforming in a case where multiconnection is performed simultaneously between the terminal and the base station.

According to the present invention, a terminal that communicates simultaneously with a plurality of base stations including multiple antennas that support beamforming and are capable of transmitting downlink beams in a plurality of directions, the terminal comprises:
multiple antennas that support beamforming and are capable of transmitting uplink beams in a plurality of directions;
communication quality measurement means for, for each of the uplink beams of different directions of the terminal, measuring communication qualities of the plurality of downlink beams from each base station;
best downlink beam selection means for, for each of the uplink beams of different directions, selecting a best downlink beam with a communication quality equal to or higher than a predetermined condition from among the plurality of downlink beams of each base station; and
best uplink beam selection means for selecting, from among the plurality of uplink beams of the terminal, a best uplink beam for which a sum total of communication qualities of the best downlink beams of all of the base stations is equal to or larger than a predetermined condition.

According to another embodiment of the terminal of the present invention,
it further comprises beam table notification means for notifying a base station control apparatus, via the base stations, of a beam table in which identifiers of the uplink beams of the terminal are associated with identifiers of the best downlink beams of the respective base stations.

According to another embodiment of the terminal of the present invention,
the best downlink beam selection means selects one or more best downlink beams with a communication quality equal to or higher than the predetermined condition, and
the beam table notification means associates identifiers of the one or more best downlink beams of each base station in the beam table.

According to another embodiment of the terminal of the present invention,
the beam table notification means further associates the communication quality of the best downlink beam of each base station with each of the identifiers of the uplink beams of the terminal in the beam table.

According to another embodiment of the terminal of the present invention,
the beam table notification means further gives notice of combinations of the identifiers of uplink beams that are simultaneously transmittable among the plurality of uplink beams of the terminal.

According to the present invention, a base station that communicates simultaneously with a plurality of terminals including multiple antennas that support beamforming and are capable of transmitting uplink beams in a plurality of directions, the base station comprises:
multiple antennas that support beamforming and are capable of transmitting downlink beams in a plurality of directions;
communication quality measurement means for, for each of the downlink beams of different directions of the base station, measuring communication qualities of the plurality of uplink beams from each terminal;
best uplink beam selection means for, for each of the downlink beams of different directions, selecting a best uplink beam with a communication quality equal to or higher than a predetermined condition from among the plurality of uplink beams of each terminal; and
best downlink beam selection means for selecting, from among the plurality of downlink beams of the base station, a best downlink beam for which a sum total of communication qualities of the best uplink beams of all of the terminals is equal to or larger than a predetermined condition.

According to another embodiment of the base station of the present invention,
it further comprises beam table notification means for notifying a base station control apparatus of a beam table in which identifiers of the downlink beams of the base station are associated with identifiers of the best uplink beams of the respective terminals.

According to another embodiment of the base station of the present invention,
the best uplink beam selection means selects one or more best uplink beams with a communication quality equal to or higher than the predetermined condition, and
the beam table notification means associates identifiers of the one or more best uplink beams of each terminal in the beam table.

According to another embodiment of the base station of the present invention,
the beam table notification means further associates the communication quality of the best uplink beam of each terminal with each of the identifiers of the downlink beams of the base station in the beam table.

According to another embodiment of the base station of the present invention,
the beam table notification means further gives notice of combinations of the identifiers of downlink beams that are simultaneously transmittable among the plurality of downlink beams of the base station.

According to the present invention, a program that causes a computer to function, the computer being mounted on a terminal that communicates simultaneously with a plurality of base stations including multiple antennas that support beamforming and are capable of transmitting downlink beams in a plurality of directions, wherein
the terminal includes multiple antennas that support beamforming and are capable of transmitting uplink beams in a plurality of directions, and
the program causes the computer to function as:
   communication quality measurement means for, for each of the uplink beams of different directions of the terminal, measuring communication qualities of the plurality of downlink beams from each base station;
   best downlink beam selection means for, for each of the uplink beams of different directions, selecting a best downlink beam with a communication quality equal to or higher than a predetermined condition from among the plurality of downlink beams of each base station; and
   best uplink beam selection means for selecting, from among the plurality of uplink beams of the terminal, a best uplink beam for which a sum total of communication qualities of the best downlink beams of all of the base stations is equal to or larger than a predetermined condition.

According to the present invention, a program that causes a computer to function, the computer being mounted on a base station that communicates simultaneously with a plurality of terminals including multiple antennas that support beamforming and are capable of transmitting uplink beams in a plurality of directions, wherein
the base station includes multiple antennas that support beamforming and are capable of transmitting downlink beams in a plurality of directions, and
the program causes the computer to function as:
   communication quality measurement means for, for each of the downlink beams of different directions of the base station, measuring communication qualities of the plurality of uplink beams from each terminal;
   best uplink beam selection means for, for each of the downlink beams of different directions, selecting a best uplink beam with a communication quality equal to or higher than a predetermined condition from among the plurality of uplink beams of each terminal; and
   best downlink beam selection means for selecting, from among the plurality of downlink beams of the base station, a best downlink beam for which a sum total of communication qualities of the best uplink beams of all of the terminals is equal to or larger than a predetermined condition.

### ADVANTAGEOUS EFFECTS OF INVENTION

According to a terminal, a base station, and a program of the present invention, the optimal combination of an uplink beam and a downlink beam in beamforming can be selected in a case where multiconnection is performed simultaneously between the terminal and the base station.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a configuration diagram showing beamforming according to a first embodiment.
FIG. 2 is a functional constituent diagram of a terminal according to the first embodiment.
FIG. 3 is a communication quality table according to the first embodiment.
FIG. 4 is a beam table according to the first embodiment.
FIG. 5 is a sequence diagram according to the first embodiment.
FIG. 6 is a configuration diagram showing combinations of beams of the terminal that can be used simultaneously according to the first embodiment.
FIG. 7 is a beam table based on FIG. 6.
FIG. 8 is a configuration diagram showing beamforming according to a second embodiment.
FIG. 9 is a functional constituent diagram of a base station according to the second embodiment.
FIG. 10 is a communication quality table according to the second embodiment.
FIG. 11 is a beam table according to the second embodiment.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

A description is now provided in accordance with the following working examples, which have been mentioned earlier.

### <First Working Example>

In a case where one terminal simultaneously with a plurality of base stations, combinations of a plurality of uplink beams of the terminal and a plurality of downlink beams of each of the plurality of base stations.

### <Second Working Example>

In a case where one base station communicates simultaneously with a plurality of terminals, combinations of a plurality of downlink beams of the base station and a plurality of uplink beams of each of the plurality of terminals.

### <First Working Example>

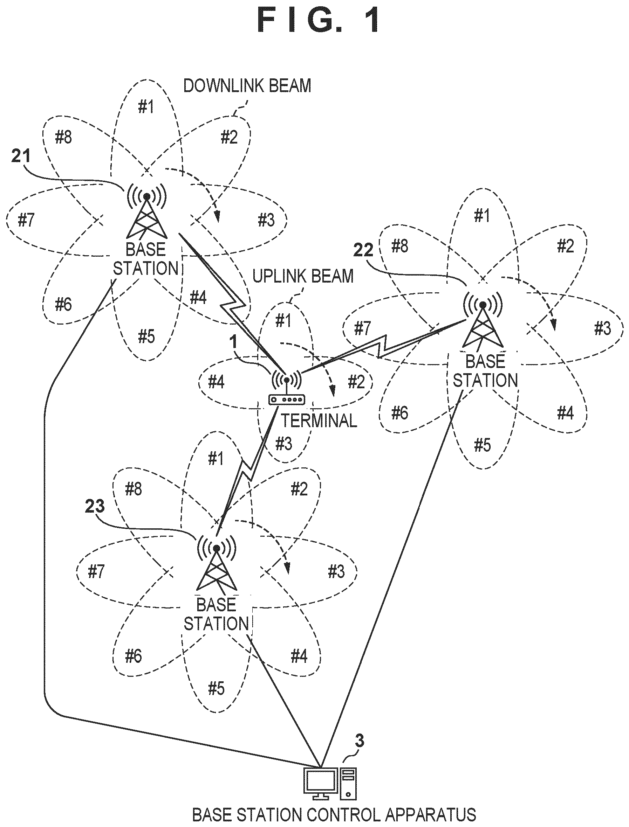

FIG. 1 is a configuration diagram showing beamforming according to a first embodiment of the present invention.

FIG. 1 shows combinations of a plurality of uplink beams of a terminal and a plurality of downlink beams of each of a plurality of base stations in a case where one terminal simultaneously with the plurality of base stations.

A system of FIG. 1 includes a terminal 1, three base stations 21 to 23, and a base station control apparatus 3.

It is assumed that the terminal 1 includes multiple antennas which support beamforming and which can transmit uplink beams in a plurality of directions, and communicates simultaneously with the plurality of base stations 2. Here, transmission beams from the terminal 1 are referred to as "uplink beams".

According to FIG. 1, it is assumed that the multiple antennas of the terminal 1 can transmit uplink beams #1 to #4 in four directions, respectively. The multiple antennas transmit reference signals of the uplink beams in different directions while performing beam sweeping. The reference signals include identifiers # of their respective uplink beams.

It is assumed that each of the base stations 21 to 23 also includes multiple antennas which support beamforming and which can transmit downlink beams in a plurality of directions, and performs communication similarly with the terminal 1. Here, transmission beams from each of the base stations 21 to 23 are referred to as "downlink beams".

According to FIG. 1, it is assumed that the multiple antennas of each of the base stations 21 to 23 can transmit downlink beams #1 to #8 in eight directions, respectively. The multiple antennas transmit reference signals of the downlink beams in different directions while performing beam sweeping. The reference signals include identifiers # of their respective downlink beams.

The base station control apparatus 3 determines the best downlink beam for communication with the terminal 1 with respect to each of the base stations 21 to 23, and controls these base stations. Furthermore, it is assumed that the base station control apparatus 3 also manages the uplink beams of the terminal 1.

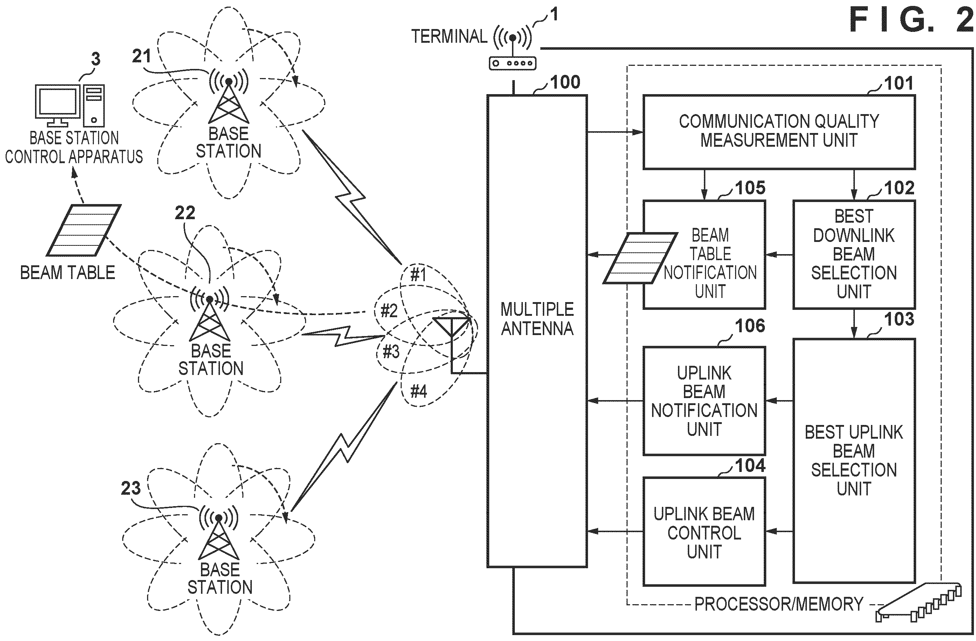

FIG. 2 is a functional constituent diagram of the terminal according to the first embodiment of the present invention.

According to FIG. 2, the terminal 1 includes a communication quality measurement unit 101, a best downlink beam selection unit 102, a best uplink beam selection unit 103, an uplink beam control unit 104, a beam table notification unit 105, and an uplink beam notification unit 106, together with multiple antennas 100. These functional constituents other than the multiple antennas are realized by executing a program that causes a computer mounted on the terminal to function. Furthermore, a flow of processing of these functional constituents can also be construed as a beam selection method in the terminal including the multiple antennas.

### [Communication Quality Measurement Unit 101]

For each of the uplink beams of different directions of this terminal 1, the communication quality measurement unit 101 measures communication qualities of the plurality of downlink beams from each base station 2. The communication qualities may be, for example, the received signal powers.

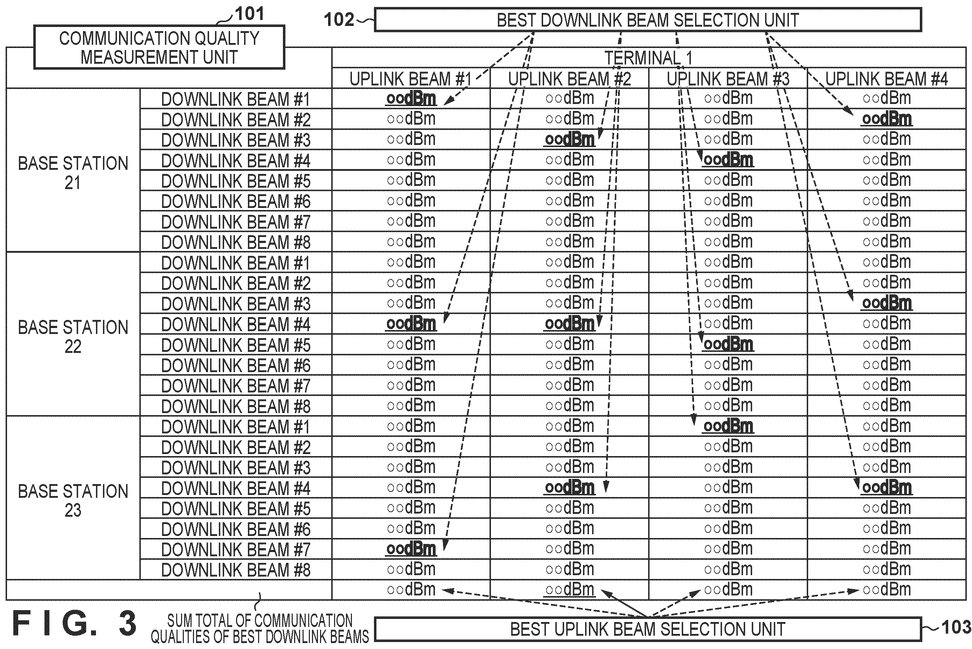

FIG. 3 is a communication quality table according to the first embodiment of the present invention.

FIG. 3 shows the received signal powers (communication qualities) corresponding to the downlink beams #1 to #8 of each of the base stations 21 to 23 with respect to each of the uplink beams #1 to #4 of the terminal 1.

### [Best Downlink Beam Selection Unit 102]

For each of the uplink beams of different directions of this terminal 1, the best downlink beam selection unit 102 selects "best downlink beams" with a communication quality equal to or higher than a predetermined condition from among the plurality of downlink beams of each base station.

For example, it is permissible to select downlink beams with the highest communication quality as the "predetermined condition" for selecting the best downlink beams.

According to FIG. 3, for example, with respect to the uplink beam #1 of the terminal 1, the downlink beam #1 with the highest communication quality is selected as the best downlink beam from among the downlink beams #1 to #8 of the base station 21. Similarly, next, with respect to the uplink beam #1 of the terminal 1, the downlink beam #4 with the highest communication quality is selected as the best downlink beam from among the downlink beams #1 to #8 of the base station 22.

Furthermore, with respect to the uplink beam #2 of the terminal 1, the downlink beam #3 with the highest communication quality is selected as the best downlink beam from among the downlink beams #1 to #8 of the base station 21.

### [Best Uplink Beam Selection Unit 103]

The best uplink beam selection unit 103 selects the "best uplink beam" for which a sum total of communication qualities of the best downlink beams of all base stations 2 is equal to or larger than a predetermined condition from among the plurality of uplink beams of this terminal 1.

For example, it is permissible to select downlink beams with the highest communication quality as the "predetermined condition" for selecting the best uplink beam.

According to FIG. 3, for example, with respect to the plurality of uplink beams #1 to #4 of the terminal 1, sum totals of communication qualities of the best downlink beams of all base stations 2 are calculated.

According to the uplink beam #1 of the terminal 1, a sum total of communication qualities of the downlink beam #1 of the base station 21, the downlink beam #4 of the base station 22, and the downlink beam #7 of the base station 23 is calculated as the best downlink beam. Similarly, according to the uplink beam #2 of the terminal 1, a sum total of communication qualities of the downlink beam #3 of the base station 21, the downlink beam #4 of the base station 22, and the downlink beam #4 of the base station 23 is calculated as the best downlink beam.

Finally, the uplink beam #2 of the terminal 1 corresponding to the largest sum total of communication qualities of the best downlink beams of all base stations 2 is selected as the "best uplink beam".

### [Uplink Beam Control Unit 104]

The uplink beam control unit 104 controls the multiple antennas 100 to communicate simultaneously with the plurality of base stations 2 via the "best uplink beam".

### [Beam Table Notification Unit 105]

The beam table notification unit 105 generates a "beam table" in which the identifiers of the plurality of uplink beams of this terminal 1 are associated with the identifiers of the best downlink beams of the respective base stations.

The beam table can be used in, for example, beam management. The following controls are defined based on the technical specifications of beam management.
Beam determination: Selection of a transmission beam/reception beam
Beam measurement: Communication quality of a reception signal of a beam
Beam reporting: Report on information related to a beam
Beam sweeping: Sweeping across a spatial area (e.g., 360 degrees).

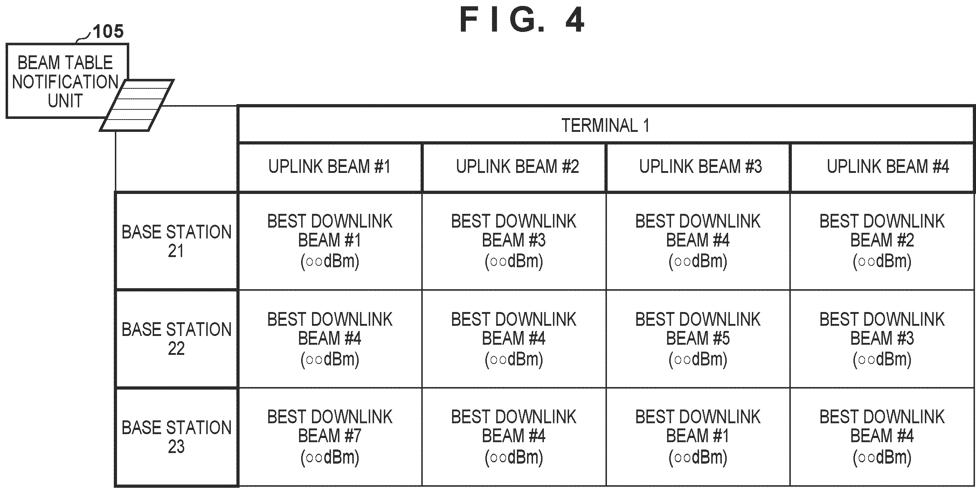

FIG. 4 is a beam table according to the first embodiment of the present invention.

According to FIG. 4, the plurality of uplink beams #1 to #4 of the terminal 1 are arranged in vertical columns. Also, for each uplink beam, the identifiers of the best downlink beams corresponding to the respective base stations 21 to 23 are associated.

According to FIG. 4, for example, the following beam table is generated.

With respect to the uplink beam #1 of the terminal 1, the identifier of the best downlink beam #1 that has the highest reception signal intensity among the best downlink beams received from the base station 21 is associated.

With respect to the uplink beam #2 of the terminal 1, the identifier of the best downlink beam #3 that has the highest reception signal intensity among the best downlink beams received from the base station 21 is associated.

With respect to the uplink beam #3 of the terminal 1, the identifier of the best downlink beam #4 that has the highest reception signal intensity among the best downlink beams received from the base station 21 is associated.

With respect to the uplink beam #4 of the terminal 1, the identifier of the best downlink beam #2 that has the highest reception signal intensity among the best downlink beams received from the base station 21 is associated.

In this way, similar associations can be made with regard to other base stations 21 and 23 from the viewpoint of the terminal 1.

Also, in the beam table, the beam table notification unit 105 may further associate the "communication quality" of the best downlink beam from each base station 2 with each of the identifiers #1 to #4 of the uplink beams of this terminal 1.

Then, the beam table notification unit 105 notifies the base station control apparatus 3 of the beam table via the base stations 2. In accordance with the uplink beam selected by the terminal 1, the base station control apparatus 3 can recognize from which one of the base stations 21 to 23 the best downlink beam is to be selected to improve the communication quality.

### [Uplink Beam Notification Unit 106]

The uplink beam notification unit 106 notifies each base station 2 of the identifier of the uplink beam of this terminal 1, and the identifiers of the best downlink beams of these base stations corresponding to this identifier of the uplink beam.

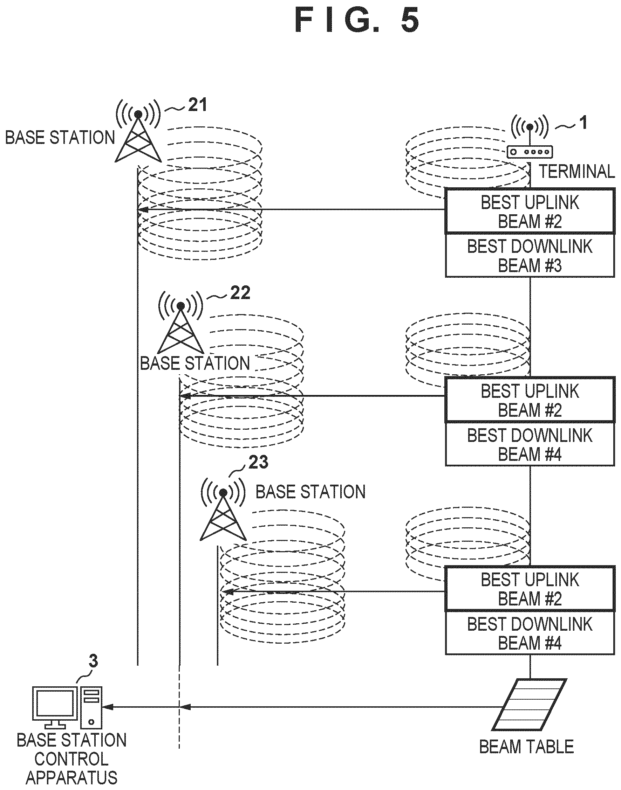

FIG. 5 is a sequence diagram according to the first embodiment of the present invention.

The uplink beam notification unit 106 notifies each base station 2 of the identifier of the best uplink beam that has been selected with respect to this terminal 1.

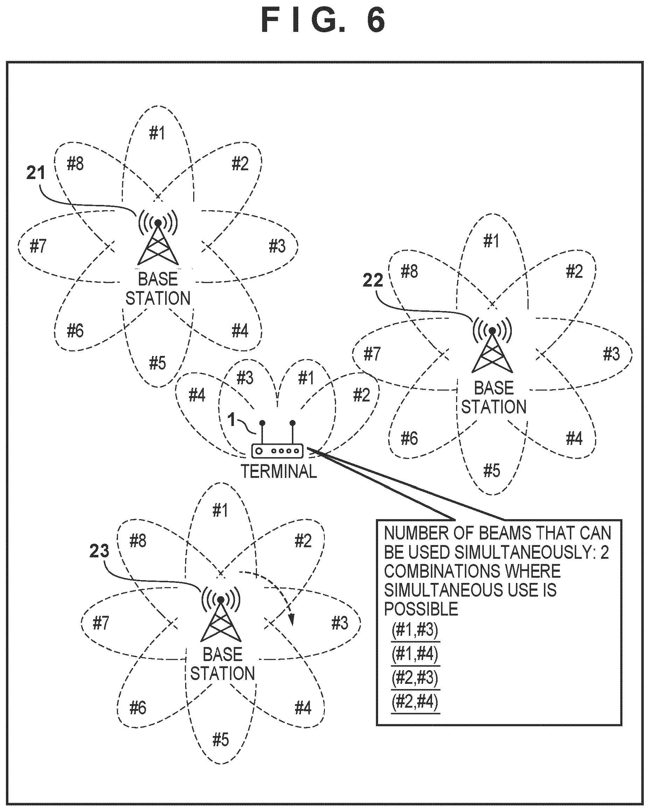

FIG. 6 is a configuration diagram showing combinations of beams of the terminal that can be used simultaneously according to the first embodiment of the present invention.

According to FIG. 6, it is assumed that the terminal 1 includes the plurality of multiple antennas 100. The number of uplink beams that can be transmitted simultaneously by the terminal 1 is also plural.

In this case, the beam table notification unit 105 further gives notice of combinations of identifiers of uplink beams that can be transmitted simultaneously among the plurality of uplink beams of this terminal 1.

The number of beams that can be used simultaneously: 2
Combinations of beams that can be used simultaneously
(uplink beam #1, uplink beam #3)
(uplink beam #1, uplink beam #4)
(uplink beam #2, uplink beam #3)
(uplink beam #2, uplink beam #4)

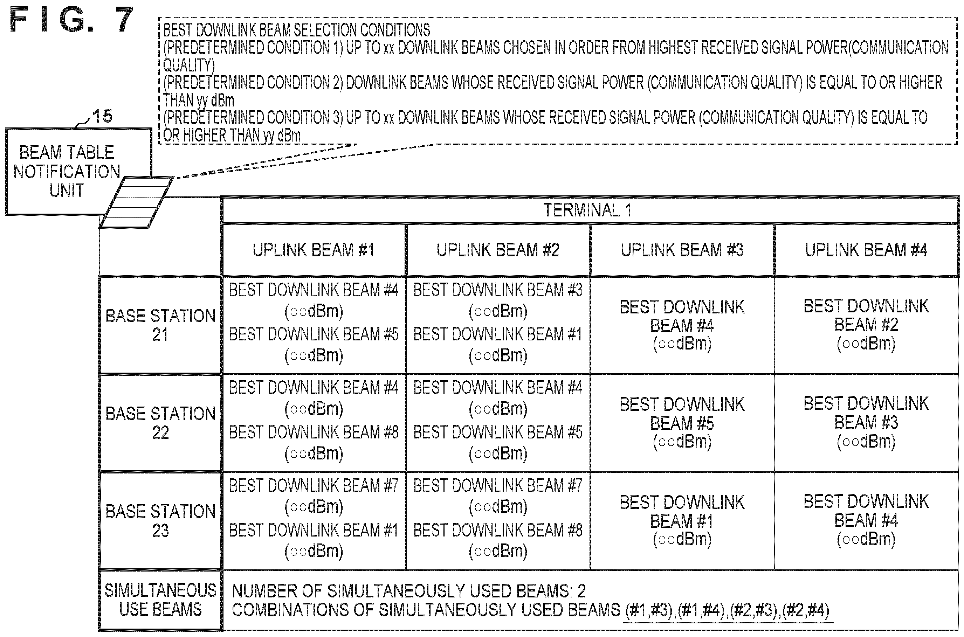

FIG. 7 is a beam table based on FIG. 6.

The above-described best downlink beam selection unit 102 may select one or more best downlink beams with a communication quality equal to or higher than a predetermined condition.

For example, in a case where the communication quality is the received signal power, a plurality of best downlink beams can be selected by setting the following predetermined conditions.
(Predetermined condition 1) Up to xx downlink beams in descending order of the received signal power
(Predetermined condition 2) Downlink beams with a received signal power equal to or higher than yy dBm
(Predetermined condition 3) Up to xx downlink beams with a received signal power equal to or higher than yy dBm

In this way, compared to the beam table of FIG. 4, in the beam table of FIG. 7, one or more best downlink beams are associated with each uplink beam of the terminal 1.

Furthermore, the beam table of FIG. 7 also includes the combinations of beams of the terminal 1 that can be used simultaneously, which are shown in FIG. 6.

As a result, the base station control apparatus 3 that has received the beam table can recognize the best downlink beams with a high communication quality of the base stations 2 for each of the beams of the terminal 1 that can be used simultaneously.

### <Second Working Example>

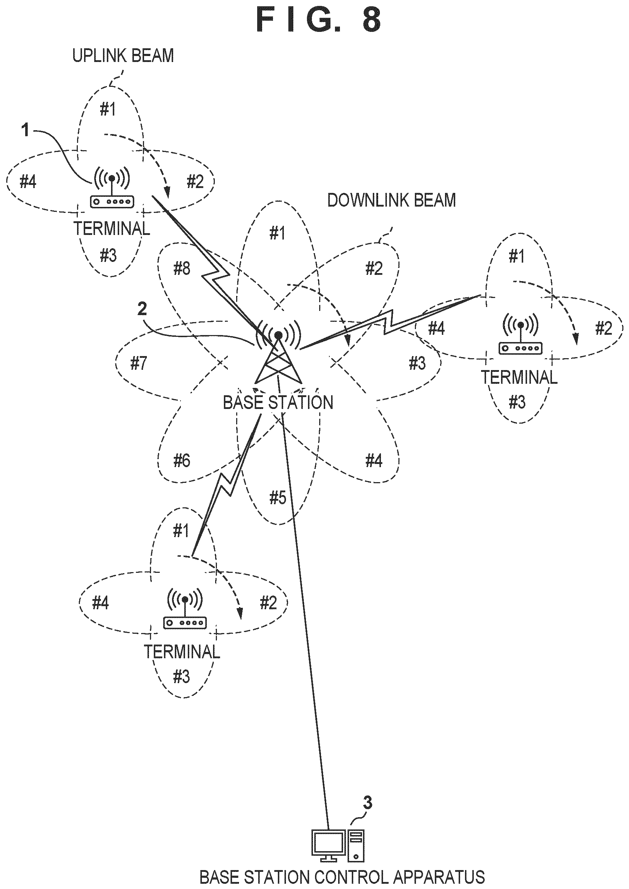

FIG. 8 is a configuration diagram showing beamforming according to a second embodiment of the present invention.

In comparison to FIG. 1, FIG. 8 shows combinations of a plurality of downlink beams of one base station 2 and a plurality of uplink beams of each of a plurality of terminals in a case where the base station communicates simultaneously with the plurality of terminals.

Terminals 1 include multiple antennas which support beamforming and which can transmit uplink beams in a plurality of directions. The functions of the terminals 1, the base station 2, and the base station control apparatus 3 are exactly the same as those of FIG. 1.

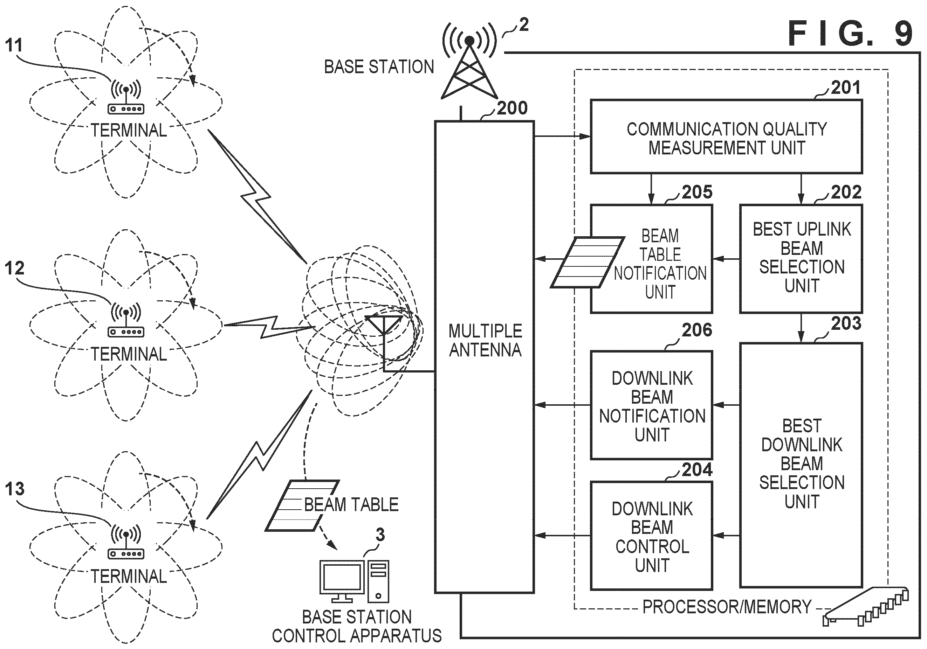

FIG. 9 is a functional constituent diagram of the base station according to the second embodiment of the present invention.

According to FIG. 9, the base station 2 includes a communication quality measurement unit 201, a best uplink beam selection unit 202, a best downlink beam selection unit 203, a downlink beam control unit 204, a beam table notification unit 205, and a downlink beam notification unit 206, together with multiple antennas 200. These functional constituents other than the multiple antennas are realized by executing a program that causes a computer mounted on the base station to function. Furthermore, a flow of processing of these functional constituents can also be construed as a beam selection method in the base station including the multiple antennas.

Comparing FIG. 9 with FIG. 2 described above, the following functions are relatively the same.

| <Terminal Side of FIG. 2> | < - > | <Base Station Side of FIG. 9> | |
|---|---|---|---|
| Communication Quality Measurement Unit | 101 | Communication Quality | |
| Measurement Unit | 201 | | |
| Best downlink beam selection unit | 102 | Best uplink beam selection unit | 202 |
| Best uplink beam selection unit | 103 | Best downlink beam selection unit | 203 |
| Uplink beam control unit | 104 | Downlink beam control unit | 204 |
| Beam table notification unit | 105 | Beam table notification unit | 205 |
| Uplink beam notification unit | 106 | Downlink beam notification unit | 206 |

### [Multiple Antennas 200]

The multiple antennas 200 support beamforming and can transmit downlink beams in a plurality of directions.

### [Communication Quality Measurement Unit 201]

For each of the downlink beams of different directions of this base station 2, the communication quality measurement unit 201 measures communication qualities of the plurality of uplink beams from each of the terminals 11 to 13.

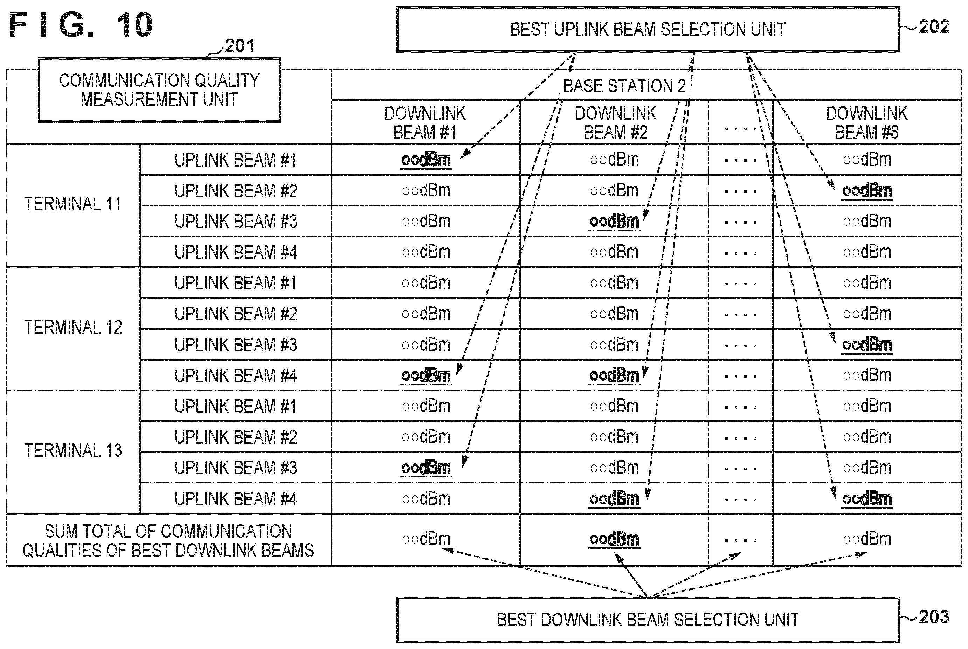

FIG. 10 is a communication quality table according to the second embodiment of the present invention.

According to FIG. 10, the received signal powers (communication qualities) of the plurality of uplink beams #1 to #4 from each of the terminals 11 to 13 are associated with each of the downlink beams #1 to #8 of different directions of this base station 2.

### [Best Uplink Beam Selection Unit 202]

For each of the downlink beams of different directions, the best uplink beam selection unit 202 selects the best uplink beam with a communication quality equal to or higher than a predetermined condition from among the plurality of uplink beams of each of the terminals 11 to 13.

According to FIG. 10, for example, with respect to the downlink beam #1 of the base station 2, the uplink beam #1 with the highest communication quality is selected as the best uplink beam among the uplink beams #1 to #4 of the terminal 11. Next, similarly, with respect to the downlink beam #1 of the base station 2, the uplink beam #4 with the highest communication quality is selected as the best uplink beam among the downlink beams #1 to #4 of the terminal 12.

Furthermore, with respect to the downlink beam #2 of the base station 2, the uplink beam #3 with the highest communication quality is selected as the best uplink beam among the uplink beams #1 to #4 of the terminal 11.

Note that the best uplink beam selection unit 202 may select one or more best uplink beams with a communication quality equal to or higher than a predetermined condition.

### [Best Downlink Beam Selection Unit 203]

The best downlink beam selection unit 203 selects, from among the plurality of downlink beams of this base station 2, the best downlink beam for which a sum total of communication qualities of the best uplink beams of all terminals 1 is equal to or larger than a predetermined condition.

According to FIG. 10, for example, with respect to the plurality of uplink beams #1 to #8 of the base station 2, the sum totals of communication qualities of the best downlink beams of all terminals 1 are calculated.

With regard to the downlink beam #1 of the base station 2, a sum total of communication qualities of the uplink beam #1 of the terminal 11, the uplink beam #4 of the terminal 12, and the uplink beam #3 of the terminal 13 is calculated as the best uplink beam. Similarly, with regard to the downlink beam #2 of the base station 2, a sum total of communication qualities of the uplink beam #3 of the terminal 11, the uplink beam #4 of the terminal 12, and the uplink beam #4 of the terminal 13 is calculated as the best uplink beam.

Finally, the downlink beam #2 of the base station 2, which corresponds to the largest sum total of communication qualities of the best downlink beams of all terminals 11 to 13, is selected as the "best downlink beam".

The downlink beam control unit 204 controls the multiple antennas 200 with use of the selected best downlink beam.

### [Beam Table Notification Unit 205]

The beam table notification unit 205 notifies the base station control apparatus 3 of a beam table in which the identifiers of the downlink beams of this base station are associated with the identifiers of the best uplink beams of the respective terminals.

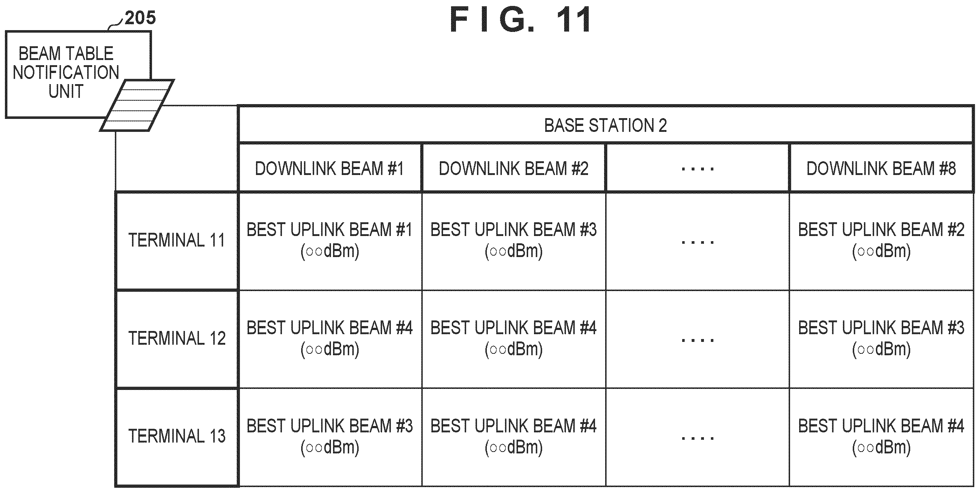

FIG. 11 is a beam table according to the second embodiment of the present invention.

According to FIG. 11, for example, the following beam table is generated.

With respect to the downlink beam #1 of the base station 2, the identifier of the best uplink beam #1 that has the highest reception signal intensity among the best uplink beams received from the terminal 11 is associated.

With respect to the downlink beam #2 of the base station 2, the identifier of the best uplink beam #3 that has the highest reception signal intensity among the best uplink beams received from the terminal 11 is associated.

With respect to the downlink beam #8 of the base station 2, the identifier of the best uplink beam #2 that has the highest reception signal intensity among the best uplink beams received from the terminal 11 is associated.

Also, the beam table notification unit 205 may associate the identifiers of one or more best uplink beams of each terminal in the beam table.

Moreover, the beam table notification unit 205 may further associate the communication quality of the best uplink beam of each terminal with each of the identifiers of the downlink beams of this base station in the beam table.

In addition, the beam table notification unit 205 may further give notice of combinations of identifiers of downlink beams that can be transmitted simultaneously among the plurality of downlink beams of this base station.

### [Downlink Beam Notification Unit 206]

The downlink beam notification unit 206 notifies each terminal 1 of the identifiers of the downlink beams of this base station 2, and the identifiers of the best uplink beams of these terminals corresponding to these identifiers of the downlink beams.

As described in detail above, according to a terminal, a base station, and a program of the present invention, the optimal combination of an uplink beam and a downlink beam in beamforming can be selected in a case where multiconnection is performed simultaneously between the terminal and the base station.

Note that as the foregoing allows for, for example, "effective use of wireless resources between the terminal and the base station", it becomes possible to contribute to Goal 9 of Sustainable Development Goals (SDGs) led by the United Nations, which is to "build resilient infrastructure, promote inclusive and sustainable industrialization, and foster innovation".

The invention is not limited to the foregoing embodiments, and various variations/changes are possible within the spirit of the invention.

The present application claims the benefit of priority from Japanese Patent Application No. 2022-156966 filed on September 29, 2022, which is hereby incorporated by reference herein in its entirety.

## Claims

1. A terminal that communicates simultaneously with a plurality of base stations including multiple antennas that support beamforming and are capable of transmitting downlink beams in a plurality of directions, the terminal comprising:
multiple antennas that support beamforming and are capable of transmitting uplink beams in a plurality of directions;
communication quality measurement means for, for each of the uplink beams of different directions of the terminal, measuring communication qualities of the plurality of downlink beams from each base station;
best downlink beam selection means for, for each of the uplink beams of different directions, selecting a best downlink beam with a communication quality equal to or higher than a predetermined condition from among the plurality of downlink beams of each base station; and
best uplink beam selection means for selecting, from among the plurality of uplink beams of the terminal, a best uplink beam for which a sum total of communication qualities of the best downlink beams of all of the base stations is equal to or larger than a predetermined condition.

2. The terminal according to claim 1, further comprising
beam table notification means for notifying a base station control apparatus, via the base stations, of a beam table in which identifiers of the uplink beams of the terminal are associated with identifiers of the best downlink beams of the respective base stations.

3. The terminal according to claim 2, wherein
the best downlink beam selection means selects one or more best downlink beams with a communication quality equal to or higher than the predetermined condition, and
the beam table notification means associates identifiers of the one or more best downlink beams of each base station in the beam table.

4. The terminal according to claim 2 or 3, wherein
the beam table notification means further associates the communication quality of the best downlink beam of each base station with each of the identifiers of the uplink beams of the terminal in the beam table.

5. The terminal according to claim 2 or 3, wherein
the beam table notification means further gives notice of combinations of the identifiers of uplink beams that are simultaneously transmittable among the plurality of uplink beams of the terminal.

6. A base station that communicates simultaneously with a plurality of terminals including multiple antennas that support beamforming and are capable of transmitting uplink beams in a plurality of directions, the base station comprising:
multiple antennas that support beamforming and are capable of transmitting downlink beams in a plurality of directions;
communication quality measurement means for, for each of the downlink beams of different directions of the base station, measuring communication qualities of the plurality of uplink beams from each terminal;
best uplink beam selection means for, for each of the downlink beams of different directions, selecting a best uplink beam with a communication quality equal to or higher than a predetermined condition from among the plurality of uplink beams of each terminal; and
best downlink beam selection means for selecting, from among the plurality of downlink beams of the base station, a best downlink beam for which a sum total of communication qualities of the best uplink beams of all of the terminals is equal to or larger than a predetermined condition.

7. The base station according to claim 6, further comprising
beam table notification means for notifying a base station control apparatus of a beam table in which identifiers of the downlink beams of the base station are associated with identifiers of the best uplink beams of the respective terminals.

8. The base station according to claim 7, wherein
the best uplink beam selection means selects one or more best uplink beams with a communication quality equal to or higher than the predetermined condition, and
the beam table notification means associates identifiers of the one or more best uplink beams of each terminal in the beam table.

9. The base station according to claim 7 or 8, wherein
the beam table notification means further associates the communication quality of the best uplink beam of each terminal with each of the identifiers of the downlink beams of the base station in the beam table.

10. The base station according to claim 7 or 8, wherein
the beam table notification means further gives notice of combinations of the identifiers of downlink beams that are simultaneously transmittable among the plurality of downlink beams of the base station.

11. A program that causes a computer to function, the computer being mounted on a terminal that communicates simultaneously with a plurality of base stations including multiple antennas that support beamforming and are capable of transmitting downlink beams in a plurality of directions, wherein
the terminal includes multiple antennas that support beamforming and are capable of transmitting uplink beams in a plurality of directions, and
the program causes the computer to function as:
communication quality measurement means for, for each of the uplink beams of different directions of the terminal, measuring communication qualities of the plurality of downlink beams from each base station;
best downlink beam selection means for, for each of the uplink beams of different directions, selecting a best downlink beam with a communication quality equal to or higher than a predetermined condition from among the plurality of downlink beams of each base station; and
best uplink beam selection means for selecting, from among the plurality of uplink beams of the terminal, a best uplink beam for which a sum total of communication qualities of the best downlink beams of all of the base stations is equal to or larger than a predetermined condition.

12. A program that causes a computer to function, the computer being mounted on a base station that communicates simultaneously with a plurality of terminals including multiple antennas that support beamforming and are capable of transmitting uplink beams in a plurality of directions, wherein
the base station includes multiple antennas that support beamforming and are capable of transmitting downlink beams in a plurality of directions, and
the program causes the computer to function as:
communication quality measurement means for, for each of the downlink beams of different directions of the base station, measuring communication qualities of the plurality of uplink beams from each terminal;
best uplink beam selection means for, for each of the downlink beams of different directions, selecting a best uplink beam with a communication quality equal to or higher than a predetermined condition from among the plurality of uplink beams of each terminal; and
best downlink beam selection means for selecting, from among the plurality of downlink beams of the base station, a best downlink beam for which a sum total of communication qualities of the best uplink beams of all of the terminals is equal to or larger than a predetermined condition.
